# EUROPEAN PATENT APPLICATION

(11) **EP 4 013 046 A1**
(43) Date of publication of application: **15.06.2022**
(21) Application number: 20212541.5
(22) Date of filing: 08.12.2020
(51) Int. Cl.: H04N 9/04

(54) **IMAGE SENSOR AND IMAGE CAPTURE APPARATUS**

(71) Applicant: Valeo Comfort and Driving Assistance, 94046 Créteil Cedex (FR)
(72) Inventor: POPOVIC, Aleksandar, 94046 Créteil Cedex (FR); PUTZ, Thomas, 94046 Créteil Cedex (FR)
(74) Representative: Delplanque, Arnaud

(57) **Abstract**

The invention concerns an image sensor comprising:
- first filters (10) adapted to transmit a first part of an electromagnetic radiation comprised in a first wavelength range (20) of the infrared spectrum;
- second filters (11, 12, 13) adapted to transmit a second part of the electromagnetic radiation comprised in a second wavelength range (21, 22, 23) of the visible spectrum;
- other filters (11, 12, 13) adapted to transmit another part of the electromagnetic radiation comprised in the visible spectrum;
- first pixels facing said first filters;
- second pixels facing said second filters;
- other pixels facing said other filters; and
- a pattern (1) comprising at least one first pixel, at least one second pixel and at least one other pixel, each pixel of said pattern being adjacent to at least one other pixel of said pattern.

According to the invention, in said pattern, the number of first pixels is strictly greater than the number of second pixels and the number of second pixels is greater than or equal to the number of other pixels.

## Description

### TECHNICAL FIELD OF THE INVENTION

The invention relates to the field of image capture.

More precisely the invention relates to an image sensor and an image capture apparatus.

### BACKGROUND INFORMATION AND PRIOR ART

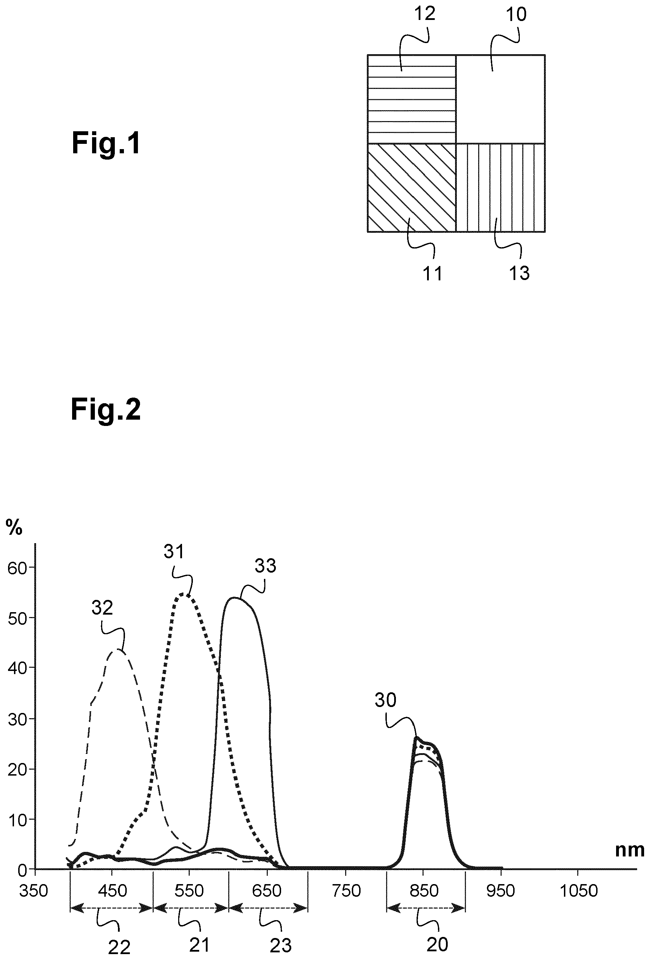

Recently, image capture apparatuses allowing capturing images both in the visible spectrum and in the infrared spectrum have been developed. These color-infrared cameras, for example "RGB-IR" (for Red Green Blue - InfraRef) cameras, classically comprise an image sensor including a grid of four optical filters overlaying photosensitive pixels. The optical filters respectively transmit red, green, blue or infrared parts of an electromagnetic radiation, i.e. of a light beam. In practice, one out of four pixels is a red pixel, one out of four pixels is a green pixel, one out of four pixels is a blue pixel and one out of four pixels is a infrared pixel. The pattern of a classical image sensor is represented in figure 1. This pattern is then repeated over the receiving surface of an image sensor of an "RGB-IR" camera.

This image sensor allows designing compact and cost-effective image capture apparatuses capable of providing both color images and infrared images. These image capture apparatuses suit for example well automotive vehicles. Color images might be used for user-machine applications, such as videoconferences, and infrared images might be used for safety applications, such as driver monitoring systems. In a vehicle, a color-infrared camera allows a proper imaging of the driver whatever the light conditions: at day, at night, with a direct sun light...

However, the resolution of the images is limited, in particular the resolution of the infrared images since the infrared pixels represent only 25% of the total number of pixels. This limited resolution of infrared images is problematic. Indeed, for some applications of the driver monitoring system, for example detecting accurately the gaze direction of the drive, high resolution infrared images are needed. A tricky situation takes place for instance at night or when a strong direct sun light brightens the face of the driver, color images might get saturated and infrared images become of chief importance.

Therefore, the need of a new image sensor for color-infrared cameras providing high-resolution infrared and color images, while remaining compact and cost-effective, has emerged.

### SUMMARY OF THE INVENTION

In this context, the invention proposes and image sensor comprising:
- first filters adapted to transmit a first part of an electromagnetic radiation comprised in a first wavelength range included in the infrared spectrum;
- second filters adapted to transmit a second part of the electromagnetic radiation comprised in a second wavelength range included in the visible spectrum;
- other filters adapted to transmit another part of the electromagnetic radiation included in the visible spectrum; and
- photosensitive pixels,
said pixels comprising:
- first pixels facing said first filters;
- second pixels facing said second filters;
- other pixels facing said other filters,
said image sensor comprising a pattern comprising at least one first pixel, at least one second pixel and at least one other pixel, each pixel of said pattern being adjacent to at least one other pixel of said pattern, in said pattern, the number of first pixels is strictly greater than the number of second pixels and the number of second pixels is greater than or equal to the number of other pixels.

Thanks to the invention, in the one hand, the resolution of infrared images is increased comparted to images provided by classical image sensors presenting 25% of infrared pixels. This increased resolution is achieved without increasing the total number of pixels and therefore the size and cost of the image sensor. Indeed, compared to the classical image sensors, selected color pixels are changed into infrared pixel.

But, in the other hand, the resolution decrease of color images is limited by adapting the second wavelength range to the use of the color image. For example, when a color image is intended to be seen be a human eye, which is more sensible to green light, second pixels might be chosen as green pixels. In this case, the increase in the number of infrared pixels mainly comes from a decrease in the number of red and blue pixels.

Overall, thanks to the invention, the color image produced with the image sensor is still pleasant to watch for the human eye and the infrared image has a sufficient resolution for safety applications.

According to possible optional features:
- in said pattern, the number of first pixels is greater than or equal to the number of second pixels and other pixels;
- in said pattern, the number of second pixels is greater than or equal to three times the number of other pixels;
- said pattern is a square having a width of at least two pixels;
- said pattern is a four pixel wide square;
- said first pixels are disposed according to a shifted grid with respect to said second pixels and said other pixels;
- at least one first pixel of said pattern is adjacent to two second pixels and to two other pixels;
- at least one first pixel of said pattern is adjacent to three second pixels and one other pixels;
- said first wavelength range is above 700 nm ;
- said second wavelength range is comprised between 500 nm and 600 nm;
- said other filters comprise third filters adapted to transmit a third part of the electromagnetic radiation comprised in a third wavelength range included in the visible spectrum and fourth filters adapted to transmit a fourth part of the electromagnetic radiation comprised in a fourth wavelength range included in the visible spectrum;
- said third wavelength range is comprised between 400 nm and 500 nm;
- said fourth wavelength range is comprised between 600 nm and 700 nm.

The invention also concerns an image capture apparatus comprising an image sensor as described above.

Other features and advantages of the embodiments of the present invention will be better understood upon reading of preferred embodiments thereof with reference to the appended drawings.

### BRIEF DESCRIPTION OF THE DRAWINGS

Figure 1 is schematic front view of a state of the art RGB-IR pattern;
Figure 2 is graphic showing the quantic efficiency of four different optical filters used in an image sensor according to the invention;
Figure 3 is schematic front view of a first embodiment of an image sensor according to the invention represented by a first pattern;
Figure 4 is schematic front view of an alternative of the first patter of figure 3;
Figure 5 is schematic front view of a second embodiment of an image sensor according to the invention represented by a second pattern.

### DETAILED DESCRIPTION OF EXAMPLE(S)

The following description, enriched with joint drawings that should be taken as non limitative examples, will help understand the invention and figure out how it can be realized.

Although two embodiments of an image sensor according to the invention are shown in the figures, the same reference numbers will be used to throughout the description of these embodiments.

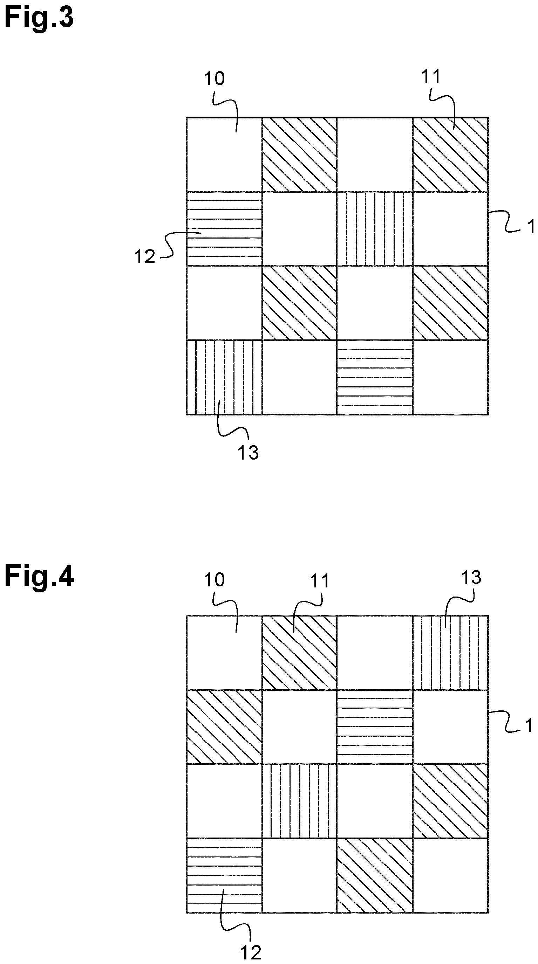

Figures 3, 4 and 5 represent, only partly, an image sensor comprising optical filters 10, 11, 12, 13 and photosensitive pixels. The optical filters 10, 11, 12, 13 overlay the photosensitive pixels. The image sensor is designed to receive an electromagnetic radiation, i.e. a light beam representative of a flied of view to image, on its receiving surface made of the optical filters 10, 11, 12, 13. The photosensitive pixels, located behind the optical filters with respect to the propagation of the light beam (and therefore not represented), receives only the parts of the radiation transmitted by the filters. The photosensitive pixels are here charge-coupled devices, CCD, or complementary metal-oxide-semiconductors, CMOS, made of silicon.

More specifically, the image sensor comprises:
- first filters 10 adapted to transmit a first part of the electromagnetic radiation comprised in a first wavelength range 20 of the infrared spectrum;
- second filters 11 adapted to transmit a second part of the electromagnetic radiation comprised in a second wavelength range 21 of the visible spectrum;
- third filters 12 adapted to transmit a third part of the electromagnetic radiation comprised in a third wavelength range 22 of the visible spectrum;
- fourth filters 13 adapted to transmit a fourth part of the electromagnetic radiation comprised in a fourth wavelength range 23 of the visible spectrum;
- first pixels, which are covered by first filters 10;
- second pixels, which are covered by second filters 11;
- third pixels, which are covered by third filters 12;
- fourth pixels, which are covered by fourth filters 13.

The four wavelength ranges 20, 21, 22, 23 of the four filters 10, 11, 12, 13 are respectively illustrated in figure 2. Figure 2 shows the respective quantic efficiency 30, 31, 32, 33 of the four filters 10, 11, 12, 13, i.e. the probability that a photon of a given wavelength is transmitted through a filter. The curve referenced 30 shows the quantic efficiency of the first filters 10. The curve referenced 31 shows the quantic efficiency of the second filters 11. The curve referenced 32 shows the quantic efficiency of the third filters 12. The curve referenced 33 shows the quantic efficiency of the fourth filters 13. A filter 10, 11, 12, 13 transmits the electromagnetic radiation in a wavelength range 20, 21, 22, 23 for example when the quantic efficiency 30, 31, 32, 33 is higher than a given threshold, for example 10%, in at least a portion of this wavelength range 20, 21, 22, 23.

As shown in figure 2, the first wavelength range 20 is above 700 nm. Here, the first wavelength range 20 is more precisely comprised between 800 nm and 1000 nm. Thus, the first wavelength range 20 belongs to the infrared spectrum. In the following, photosensitive pixels associated with first filters 10, i.e. first pixels, are called infrared pixels. Electrical signals produced by infrared pixels are representative of the intensity of the infrared part of the electromagnetic radiation received by the image sensor.

The second wavelength range 21 is here comprised between 500 nm and 600 nm. For example, the second wavelength range can be comprised between 500 nm and 560 nm. Second filters 11 have a peak efficiency around 550 nm. Thus, second filters 11 mainly transmit green light. In the following, photosensitive pixels associated with second filters 11, i.e. second pixels, are called green pixels. Electrical signals produced by green pixels are mainly representative of the intensity of the green part of the electromagnetic radiation received by the image sensor.

The third wavelength range 22 is here comprised between 400 nm and 500 nm. For example, the third wavelength range can be comprised between 450 nm and 490 nm. Third filters 12 have a peak efficiency around 450 nm. Thus, third filters 12 mainly transmit blue light. In the following, photosensitive pixels associated with third filters 13, i.e. third pixels, are called blue pixels. Electrical signals produced by blue pixels are mainly representative of the intensity of the blue part of the electromagnetic radiation received by the image sensor.

The fourth wavelength range 23 is here comprised between 600 nm and 700 nm. For example, the fourth wavelength range can be comprised between 630 nm and 700 nm. Fourth filters 13 have a peak efficiency around 620 nm. Thus, fourth filters 13 mainly transmit red light. In the following, photosensitive pixels associated with fourth filters 13, i.e. fourth pixels, are called red pixels. Electrical signals produced by red pixels are mainly representative of the intensity of the red part of the electromagnetic radiation received by the image sensor.

Here, the four wavelength ranges 20, 21, 22, 23 are distinct, meaning that they do not completely overlap. Here, the second, third and fourth filters 11, 12, 13 also comprise a transmission range between 800 nm and 900 nm.

Here, second pixels, third pixels and fourth pixels are color pixels.

In figures 3, 4 and 5, each square represents one filter 10, 11, 12, 13 overlaying one photosensitive pixel. So, here, each square also represents an infrared pixel, a green pixel, a blue pixel or a red pixel. Here, the photosensitive pixels and the filters 10, 11, 12, 13 are square-shaped. Pixels, and therefore filters 10, 11, 12, 13, are arranged in rows and columns forming a gird. Pixels are disposed side by side.

Over the receiving surface of the image sensor, pixels are arranged according to a pattern 1. Here, a pattern 1 is a group of adjacent pixels, i.e. in contact with each others by their sides. Within a pattern 1, each pixel is adjacent to at least another pixel. Here, the pattern 1 might be defined as the smallest group of pixels which when regularly repeated forms the receiving surface of the image sensor. Here, regularly repeated means that to form the image sensor, patterns are disposed side by side in the row direction and in the column direction, in the same orientation and without leaving blanks.

Here, the image sensor is for example square-shaped or rectangular-shaped and comprises between two and three millions of pixels.

The pattern 1 is a matrix of adjacent pixels. The pattern 1 is here a square having a width of several pixels. For example, as represented on figures 3, 4 and 5, the pattern 1 is a four pixel wide square. The pattern 1 comprises 16 pixels.

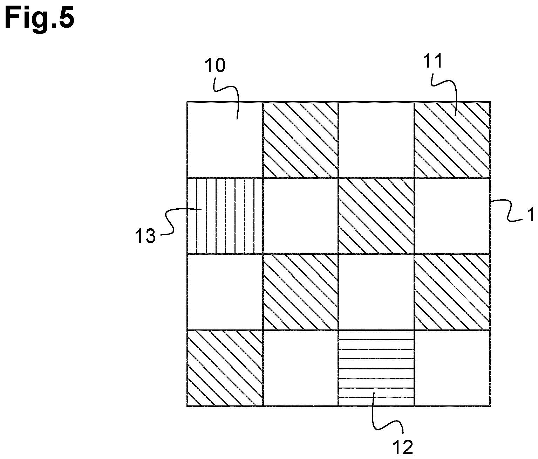

In a first embodiment, illustrated in figure 3, pixels are arranged according to a first pattern 1. In a second embodiment, illustrated in figure 5, pixels are arranged according to a second pattern 1.

In both embodiments, the pattern 1 comprises 8 infrared pixels. In other words, half the pixels of the pattern 1, and so half the pixels of the image sensor, are infrared pixels. Consequently, the resolution of the infrared images produced with the pattern 1 according to the invention is two times higher than the resolution of infrared image produced by the classical RGB-IR pattern illustrated in figure 1. The classical RGB-IR pattern illustrated in figure 1 is a two pixel wide square comprising one infrared pixel, one green pixel and one red pixel.

In both embodiments, infrared pixels are laid out in quincunx within the pattern 1. In this disposition, one out of two pixels is an infrared pixel in an shifted way, i.e. with a shift of one pixel, from a row to the next and from a column to the next. In other words, infrared pixels are here connected to each others by their corners. This homogenous repartition of the infrared pixels over the receiving surface of the image sensor allows reconstructing high resolution images after interpolation.

In both embodiments, the pattern 1 comprises more green pixels than red pixels. The pattern 1 also comprises more green pixels than blue pixels. The pattern 1 also comprises at least as many green pixels than blue pixels and red pixels together. Here, the color image produced with the image sensor is to be seen by human eye which has more receptors dedicated to green light. This higher proportion of green pixels over blue and red pixels allows building a color image that seems to have a high resolution despite half the pixel of the image sensor being infrared pixel.

In the first embodiment, represented in figure 3, the first pattern 1 comprises 4 green pixels, 2 blue pixels and 2 red pixels. Here, the first pattern 1 comprises as many green pixels as blue pixels and red pixels together. On the image sensor associated with the first pattern 1, each infrared pixel is adjacent to two green pixels, one blue pixel and one red pixel. This does not apply to pixels on the edge of the image sensor.

In the first embodiment, each green pixel is two pixels away, along its row and its column, from another green pixel. Over the image sensor, the network of green pixels is homogenous but less dense than the network of infrared pixels. Each red or blue pixel is two pixels away, in a diagonal direction at 45 degrees with respect to the rows and columns, to another blue or red pixel. Over the image sensor, the network of red or blue pixels is homogenous but less dense than the network of green pixels. The first pattern 1, having two red pixels and two blue pixels, reduces red and blue artifacts on sharp edges in an acquired image, as compared with the second pattern 1 presented in figure 5.

Figure 4 shows an alternative first pattern. Here, the alternative first pattern 1 still comprises as many green pixels as blue pixels and red pixels together, that is to say, here, 4 green pixels, 2 blue pixels, 2 red pixels and 8 infrared pixels. However, when the alternative first pattern is repeated, each green pixel is diagonally adjacent to two other green pixels. As for red and blue pixels when the alternative first pattern is repeated, each blue pixel is diagonally adjacent to two red pixels and vice versa.

In the second embodiment, represented in figure 5, the second pattern 1 comprises 6 green pixels, 1 blue pixel and 1 red pixel. Here, the second pattern 1 comprises three times more green pixels than blue pixels and red pixels together. On the image sensor associated with the second pattern 1, each infrared pixel is adjacent to three green pixels and to one blue pixel or to one red pixel. This does not apply to pixels on the edge of the image sensor.

In the second embodiment, the network of green pixels is less homogenous over the image sensor but denser than the network of green pixels of the first embodiment. To human eye, an image produced with the image sensor of the second embodiment would have a higher resolution than an image produced with the image sensor of the first embodiment. Each red or blue pixel is four pixels away, along its row and its column, to another blue or red pixel. Over the image sensor, the network of red or blue pixels is homogenous but way less dense than the network of green pixels.

It is to be noted that many representations exist for the first and for the second pattern 1. For example, other equivalent representations with 16 pixels can be visualized by moving the periphery of a four pixel wide square over the surface of an image sensor. In other words, for an image sensor according an embodiment of the invention, every square of 16 pixels is an equivalent representation of the first or of the second pattern 1.

Repeating the first or the second pattern 1 over the image sensor allows making an image capture apparatus (not represented) capable of producing high resolution infrared images and color images. The image capture apparatus also comprises an electronic circuit to process the electrical signal deliver by the pixels.

In the description above, second pixels are presented as green pixels, third pixels as blue pixels and fourth pixels as red pixels. However, the attribution of a color to a kind of pixel may change. For example, as a variant, second pixels may be red pixels.

In another variant, the image capture apparatus may be based on other colors than the classic red green blue decomposition. For example, in a variant, the image capture apparatus may be a "CMY-IR" camera, for Cyan Magenta Yellow - InfraRed. In this case, second pixels may be cyan pixels and the second wavelength rage may be comprised between 490 nm and 520 nm. Third and fourth pixels may be magenta and yellow pixels and the third and fourth wavelength range adapted consequently.

## Claims

1. Image sensor comprising:
- first filters (10) adapted to transmit a first part of an electromagnetic radiation comprised in a first wavelength range (20) included in the infrared spectrum;
- second filters (11, 12, 13) adapted to transmit a second part of the electromagnetic radiation comprised in a second wavelength range (21, 22, 23) included in the visible spectrum;
- other filters (11, 12, 13) adapted to transmit another part of the electromagnetic included in the visible spectrum; and
- photosensitive pixels,
said pixels comprising:
- first pixels facing said first filters (10);
- second pixels facing said second filters (11, 12, 13);
- other pixels facing said other filters (11, 12, 13),
said image sensor comprising a pattern (1) comprising at least one first pixel, at least one second pixel and at least one other pixel, each pixel of said pattern (1) being adjacent to at least one other pixel of said pattern (1),
**characterized in that**, in said pattern (1), the number of first pixels is strictly greater than the number of second pixels and the number of second pixels is greater than or equal to the number of other pixels.

2. Image sensor according to claim 1, wherein, in said pattern (1), the number of first pixels is greater than or equal to the number of second pixels and other pixels.

3. Image sensor according to claim 1 or 2, wherein, in said pattern (1), the number of second pixels is greater than or equal to three times the number of other pixels.

4. Image sensor according to anyone of claims 1 to 3, wherein said pattern (1) is a square having a width of at least two pixels.

5. Image sensor according to anyone of claims 1 to 4, wherein said pattern (1) is a four pixel wide square.

6. Image sensor according to anyone of claims 1 to 5, wherein said first pixels are disposed according to a shifted grid with respect to said second pixels and said other pixels.

7. Image sensor according to anyone of claims 1 to 6, wherein at least one first pixel of said pattern (1) is adjacent to two second pixels and to two other pixels.

8. Image sensor according to anyone of claims 1 to 7, wherein at least one first pixel of said pattern (1) is adjacent to three second pixels and one other pixels.

9. Image sensor according to anyone of claims 1 to 8, wherein said first wavelength range (20) is above 700 nm.

10. Image sensor according to anyone of claims 1 to 9, wherein said second wavelength range (21, 22, 23) is comprised between 500 nm and 600 nm.

11. Image sensor according to anyone of claims 1 to 10, wherein said other filters (11, 12, 13) comprise third filters (11, 12, 13) adapted to transmit a third part of the electromagnetic radiation comprised in a third wavelength range (21, 22, 23) included in the visible spectrum and fourth filters (11, 12, 13) adapted to transmit a fourth part of the electromagnetic radiation comprised in a fourth wavelength range (21, 22, 23) included in the visible spectrum.

12. Image sensor according to claim 11, wherein said third wavelength range (21, 22, 23) is comprised between 400 nm and 500 nm.

13. Image sensor according to claim 11 or 12, wherein said fourth wavelength range (21, 22, 23) is comprised between 600 nm and 700 nm.

14. Image capture apparatus comprising an image sensor according to anyone of claims 1 to 13.
